(19) Europäisches Patentamt
European Patent Office
Office européen des brevets

(11) **EP 4 184 742 B1**

(12) **EUROPEAN PATENT SPECIFICATION**

(45) Date of publication and mention
of the grant of the patent:
**21.05.2025 Bulletin 2025/21**

(21) Application number: **21866072.8**

(22) Date of filing: **10.09.2021**

(51) International Patent Classification (IPC):
***H02J 3/36*** *(2006.01)*     ***H02M 1/32*** *(2007.01)*
***H02M 7/483*** *(2007.01)*

(52) Cooperative Patent Classification (CPC):
**H02M 7/4835; H02J 3/36; H02M 1/322; Y02E 60/60**

(86) International application number:
**PCT/CN2021/117724**

(87) International publication number:
**WO 2022/053020 (17.03.2022 Gazette 2022/11)**

(54) **FLEXIBLE DIRECT-CURRENT TRANSMISSION LINE DISCHARGING METHOD AND APPARATUS, AND STORAGE MEDIUM**

VERFAHREN UND VORRICHTUNG ZUR ENTLADUNG EINER FLEXIBLEN GLEICHSTROMÜBERTRAGUNGSLEITUNG UND SPEICHERMEDIUM

PROCÉDÉ ET APPAREIL DE DÉCHARGE DE LIGNE DE TRANSMISSION DE COURANT CONTINU FLEXIBLE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2020 CN 202010949386**

(43) Date of publication of application:
**24.05.2023 Bulletin 2023/21**

(73) Proprietors:
• **NR ELECTRIC CO., LTD.**
**Jiangning**
**Nanjing,**
**Jiangsu 211102 (CN)**
• **NR Engineering Co., Ltd.**
**Nanjing, Jiangsu 211102 (CN)**

(72) Inventors:
• **ZHAN, Changjiang**
**Nanjing, Jiangsu 211102 (CN)**
• **HU, Zhaoqing**
**Nanjing, Jiangsu 211102 (CN)**
• **SHAO, Zhenxia**
**Nanjing, Jiangsu 211102 (CN)**
• **LI, Gang**
**Nanjing, Jiangsu 211102 (CN)**
• **DONG, Yunlong**
**Nanjing, Jiangsu 211102 (CN)**
• **LU, Yu**
**Nanjing, Jiangsu 211102 (CN)**

(74) Representative: **Kurig, Thomas**
**Becker Kurig & Partner**
**Patentanwälte mbB**
**Bavariastraße 7**
**80336 München (DE)**

(56) References cited:
**CN-A- 103 308 869**    **CN-A- 106 877 298**
**CN-A- 107 196 539**    **CN-A- 108 400 701**
**CN-A- 111 555 334**    **CN-A- 112 086 993**

**Description**

Technical Field

The application relates to the technical field of power system transmission, in particular to a voltage sourced converter direct-current transmission line discharge method and device, and storage medium.

Background

As the most controllable transmission method at present, voltage sourced converter direct-current transmission is widely used in occasions like new energy grid connection, island power supply, and offshore platform power supply, and is also a superior solution for grid interconnection and load center power supply in urbans.

In many occasions, a cable is used as a transmission medium in voltage sourced converter direct-current transmission. A long cable has a large equivalent capacitance and will store energy while direct current passing through, it takes up to 30 to 60 minutes for the electricity accumulated on the cable to be released after voltage sourced converter direct-current transmission is out of operation, and the high voltage before discharge ends is dangerous to personal safety. This problem is particularly prominent in the fields of offshore platform power supply and offshore wind power grid connection. Offshore platforms, especially offshore oil and gas field platforms, have many devices and are extremely sensitive to heat and fire sources. When a voltage sourced converter direct-current transmission system is out of service, it is necessary to enter a valve hall timely to check whether there are any dangerous sources, so as to ensure the safety of the whole platform. However, due to the limitation of cable discharge time, people often have to wait for more than half an hour to approach the valve hall, which poses a serious safety threat.

At present, there are two methods to accelerate the discharge speed of voltage sourced converter direct-current transmission cables. The first method is to add a breaker and a resistance grounding circuit to two ends of the cable to speed up discharge, that is, adding additional complex equipment in order to realize safe and fast discharge. The second method is to accelerate discharging by means of a direct-current energy-consuming device, which cannot be realized in a system in which no energy-consuming device is designed or installed. Take offshore voltage sourced converter direct-current transmission as an example, core equipment is assembled in a dock and high-pressure testing is completed, and huge energy-consuming devices are generally not included, which leads to doubling of the test time and a significant increase in the engineering cost.

Summary

An embodiment of the application provides a discharge method for a voltage sourced converter direct-current transmission line. The method comprises: unlocking a converter valve; generating an additional control signal by an additional controller and superimposing the additional control signal on a reference voltage output by a main controller of the voltage sourced converter direct-current transmission system, so that the converter valve generates a harmonic current in a three-phase bridge arm of a converter; and locking the converter when a direct-current transmission line voltage is lower than a voltage setting or an average voltage of normal operating submodules in the converter bridge arm is lower than a submodule operating voltage setting.

According to some embodiments, before unlocking the converter, the method further comprises: charging the converter by using a residual voltage of the direct-current line, determining whether the charging can be completed, and unlocking the converter valve if yes; wherein after unlocking the converter, the method further comprises: if the charging cannot be completed, closing an AC incoming switch, charging the converter, and determining again whether the charging can be completed; and if the charging can be completed, opening the AC incoming switch and unlocking the converter valve at a same time.

According to some embodiments, the additional controller comprises an input signal generator, a first PI control module, a second PI control module, a transformation module and an inverse transformation module, wherein the input signal generator is configured to generate three-phase negative sequence currents; the transformation module is configured to transform the three-phase negative sequence currents into a first current reference component and a second current reference component; the first PI control module is configured to receive a first difference component generated by comparing the first current reference component with a measured three-phase current signal, and output a first current difference component; the second PI control module is configured to receive a second difference component generated by comparing the second current reference component with the measured three-phase current signal, and output a second current difference component; and the inverse transformation module is configured to receive the first current difference component and the second current difference component, and output the additional control signal.

According to some embodiments, the input signal generator generates three-phase negative sequence currents $i_a$, $i_b$, $i_c$, the amplitude I thereof is an amplitude of a harmonic current injected into the converter, which is p1% of a rated bridge arm current, where p1 is 0.001-100 and can be set according to an actual DC transmission line voltage; a phase $\omega t$ is based on a valve side voltage $U_v$ or a grid side voltage $U_s$; n is an integer and n≥2; $\delta$ is a compensation angle, 0°≤$\delta$≤90°; and

$$i_a(t) = I\sin(n\omega t + \delta)$$

$$i_b(t) = I\sin(n\omega t + 120° + \delta)$$

$$i_c(t) = I\sin(n\omega t - 120° + \delta)$$

According to some embodiments, the additional control signals $u_{cira}$, $u_{cirb}$ and $u_{circ}$ output by the additional controller are correspondingly superimposed on voltage control signals $u_{refa}$, $u_{refb}$ and $u_{refc}$ output by a main controller of the voltage sourced converter direct-current transmission system to serve as converter valve control signals, so that the converter valve generates the harmonic current in the three-phase bridge arm.

According to some embodiments, during normal operation, the additional controller don't work and is activated when discharging is required.

An embodiment of the application provides a discharge device for a voltage sourced converter direct-current transmission line, comprising a control module, an additional controller and a converter locking module, wherein the control module is configured to unlock a converter valve; the additional controller is configured to generate an additional control signal and superimpose the additional control signal on a reference voltage output by a main controller of the voltage sourced converter direct-current transmission system, so that the converter valve generates a harmonic current in a three-phase bridge arm of a converter; and the converter locking module is configured to lock the converter when a voltage of a direct-current line is lower than a voltage setting or an average voltage of normal operating sub-modules in the bridge arm is lower than the sub-module operating voltage setting.

According to some embodiments, the control module is configured to charge the converter by using a residual voltage of the direct-current line, determines whether the charging can be completed, unlocks the converter valve if yes, closes an AC incoming switch and charges the converter if not, determines again whether the charging can be completed, and opens the AC incoming switch and unlocks the converter valve at the same time if the charging can be completed.

According to some embodiments, the additional controller comprises an input signal generator, a transformation module, a first PI control module, a second PI control module and an inverse transformation module, wherein the input signal generator generates three-phase negative sequence currents; the transformation module transforms the three-phase negative sequence currents into a first current reference component and a second current reference component; the first PI control module receives a first difference component generated by comparing the first current reference component with a measured three-phase current signal, and outputs a first current difference component; the second PI control module receives a second difference component generated by comparing the second current reference component with the measured three-phase current signal, and outputs a second current difference component; and the inverse transformation module receives the first current difference component and the second current difference component, and outputs the additional control signal.

According to some embodiments, the application further provides a computer-readable storage medium on which a processor program is stored, wherein the processor program is used to execute the method as mentioned above.

According to the technical scheme provided by the embodiments of the application, the fast discharge method for the voltage sourced converter direct-current transmission cable does not need any additional equipment, so the economical performance is good. Further, the method is controllable in discharge time and excellent in flexibility, and can be used reliably in any situation, thus having great adaptability.

Brief Description of the Drawings

In order to explain the technical solution in the embodiments of the application more clearly, the drawings used in the description of the embodiments will be briefly introduced below. Obviously, the drawings in the following description only illustrate some embodiments of the application, and for those of ordinary technicians in the field, other drawings can be obtained according to these drawings without paying creative effort.

Fig. 1 is a circuit diagram of a discharge method for a voltage sourced converter direct-current transmission line provided by an embodiment of the application.
Fig. 2 is a flowchart of a discharge method for a voltage sourced converter direct-current transmission line provided by an embodiment of the application.
Fig. 3 is a flowchart of another discharge method for a voltage sourced converter direct-current transmission line provided by an embodiment of the application.

Fig. 4 is a flowchart of yet another discharge method for a voltage sourced converter direct-current transmission line provided by an embodiment of the application.

Fig. 5 is a flowchart of still another discharge method for a voltage sourced converter direct-current transmission line provided by an embodiment of the application.

Fig. 6 is a diagram of an additional controller provided by an embodiment of the application.

Fig. 7 is a diagram of an additional control signal provided by an embodiment of the application.

Fig. 8 is a functional block diagram of a discharge device for a voltage sourced converter direct-current transmission line provided by an embodiment of the application.

Detailed Description of Embodiments

The technical solution in the embodiments of the application will be described clearly and completely with reference to the drawings in the embodiments of the application. Obviously, the described embodiments are part of the embodiments of the application, not all of them. Based on the embodiments in the application, all other embodiments obtained by those skilled in the art without creative effort are within the scope of the application.

It should be understood that the terms "first" and "second" in the claims, specification and drawings of the application are used to distinguish different objects, but not to describe a specific order. As used in the specification and claims of the application, the terms "comprise" and "include" indicate the presence of the described features, integers, steps, operations, elements and/or components, but do not exclude the presence or addition of one or more other features, integers, steps, operations, elements, components and/or groups thereof.

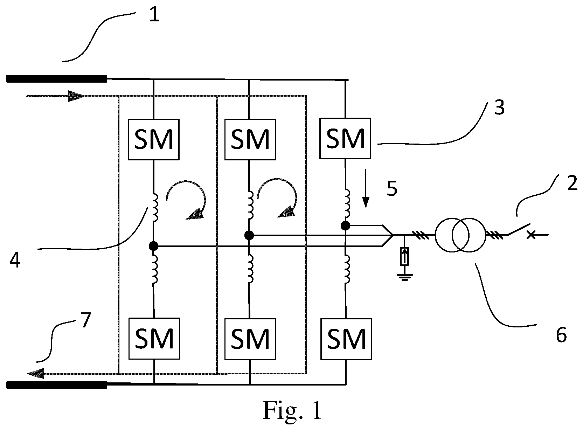

Fig. 1 is a circuit diagram of a discharge method for a voltage sourced converter direct-current transmission line provided by an embodiment of the application.

A converter 3 is controlled to turn on, so that a direct-current line 1 and a direct-current line 7 form a circuit through the converter valve 3, and accumulated charges in the direct-current line are dissipated through equivalent resistance and reactance in the converter 3, thus realizing rapid discharge of the direct-current line.

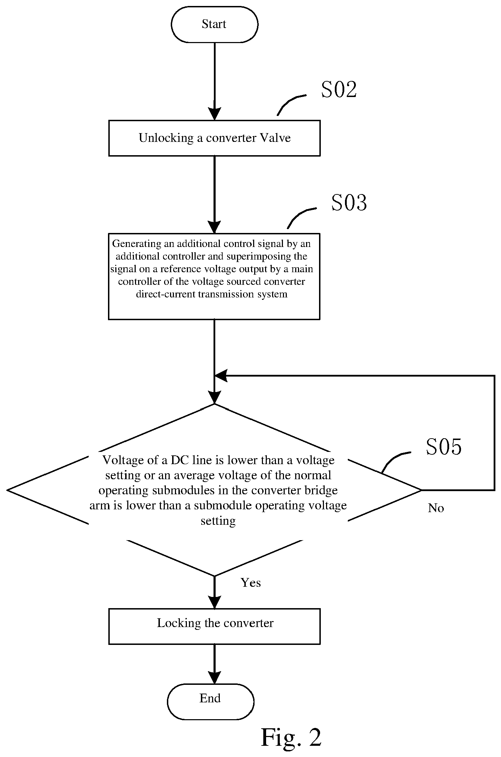

Fig. 2 is a flowchart of a discharge method for a voltage sourced converter direct-current transmission line provided by an embodiment of the application.

In S02, a converter valve is unlocked.

When the converter valve is unlocked, accumulated charges in direct-current line are dissipated through equivalent resistance and reactance in the converter.

In S03, an additional control signal is generated from an additional controller and superimposed on a reference voltage output by a main controller of the voltage sourced converter direct-current transmission system, so that the converter valve generates a harmonic current in a three-phase bridge arm of the converter, thus accelerating the process of the discharging in the direct-current line through the equivalent resistance and reactance in the converter.

In S05, when a voltage of the direct-current line is lower than a voltage setting or an average voltage of normal operating submodules in the bridge arm of converter is lower than a submodule operating voltage setting, the converter is locked, thereby finishing the whole accelerated discharge process.

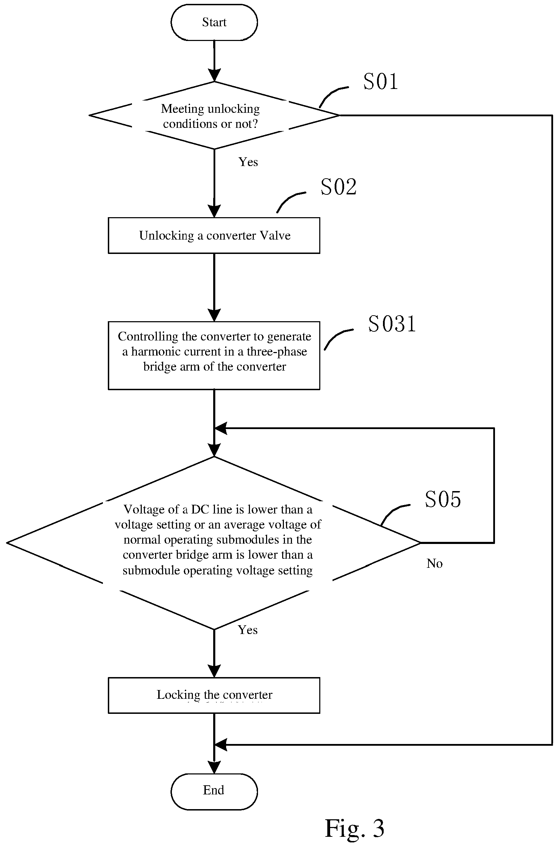

Fig. 3 is a flowchart of another discharge method for a voltage sourced converter direct-current transmission line provided by an embodiment of the application.

In S01, when a voltage sourced converter direct-current transmission system is shut down and an AC incoming switch is opened, whether a voltage of a sub-module is higher than an unlocking threshold and meets the unlocking conditions is determined, and the control process is ended if not.

In S02, a converter valve is unlocked.

In S031, after the converter valve is unlocked, an additional control signal is generated from an additional controller and superimposed on a reference voltage output by a main controller of the voltage sourced converter direct-current transmission system, so that the converter valve generates a harmonic current in a three-phase bridge arm of a converter, thus accelerating the discharging in the direct-current line through the equivalent resistance and reactance in the converter.

In S05, when a voltage of the direct-current line is lower than a voltage setting or an average voltage of normal operating submodules in the bridge arm of the converter is lower than a submodule operating voltage setting, the converter is locked, thereby finishing the whole discharge process accelerated.

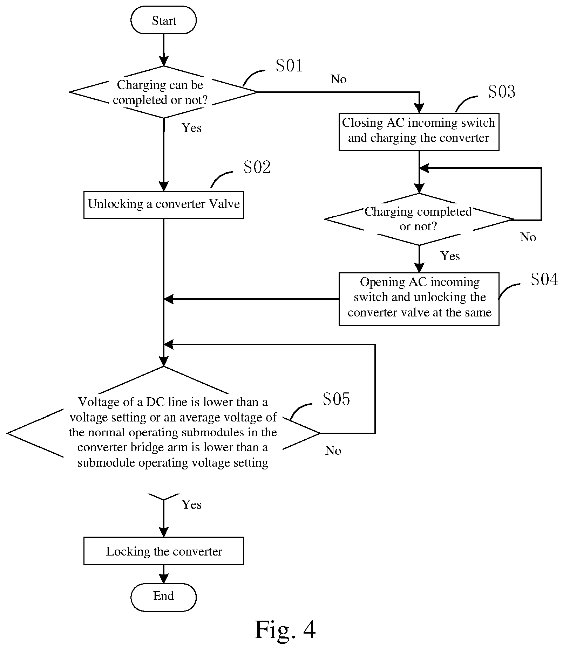

Fig. 4 is a flowchart of yet another discharge method for a voltage sourced converter direct-current transmission line provided by an embodiment of the application.

In S01, after a voltage sourced converter direct-current transmission system is shut down and the AC incoming switch is opened, a converter is charged by using a residual voltage of a direct-current line, and whether the charging can be completed is determined.

In S02, if the charging can be completed, the converter valve is unlocked.

In S03, if the charging cannot be completed, the AC incoming switch is closed, the converter is charged, and whether the charging can be completed is determined again.

In S04, if the charging can be completed, the AC incoming switch is opened and the converter valve is unlocked.

When the converter valve is unlocked, accumulated charges in a direct-current line are dissipated through equivalent resistance and reactance in the converter.

In S05, when a voltage of the direct-current line is lower than a voltage setting or an average voltage of normal operating submodules in the bridge arm of the converter is lower than a submodule operating voltage setting, the converter is locked.

After the residual voltage of the direct-current line is reduced below a specified value or the average voltage of the modules in a normal operating state in the bridge arm is reduced to a specified value, the converter is locked. Then the whole discharge process is ended.

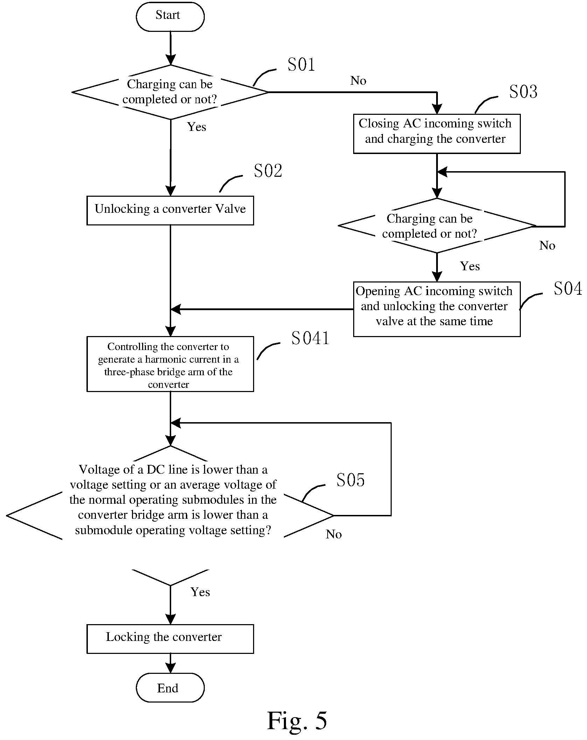

Fig. 5 is a flowchart of still another discharge method for a voltage sourced converter direct-current transmission line provided by an embodiment of the application.

In S01, after a voltage sourced converter direct-current transmission system is shut down and the AC incoming switch is opened, a converter is charged by using a residual voltage of a direct-current line, and whether the charging can be completed is determined.

In S02, if the charging can be completed, the converter valve is unlocked.

In S03, if the charging cannot be completed, the AC incoming switch is closed, the converter is charged, and whether the charging can be completed is determined again.

In S04, if the charging can be completed, the AC incoming switch is opened and the converter valve is unlocked.

In S041, after the converter valve is unlocked, an additional control signal is generated from an additional controller and superimposed on a reference voltage output by a main controller of the voltage sourced converter direct-current transmission system, so that the converter valve generates a harmonic current in a three-phase bridge arm of the converter, thus accelerating the process of dissipating the accumulated charges in the direct-current line through the equivalent resistance and reactance in the converter.

In S05, when a voltage of the direct-current line is lower than a voltage setting or an average voltage of normal operating submodules in the bridge arm of the converter is lower than a submodule operating voltage setting, the converter is locked.

After the residual voltage of the direct-current line is reduced below a specified value or the average voltage of the modules in a normal operating state in the bridge arm is reduced to a specified value, the converter is locked. Then the whole discharge process is ended.

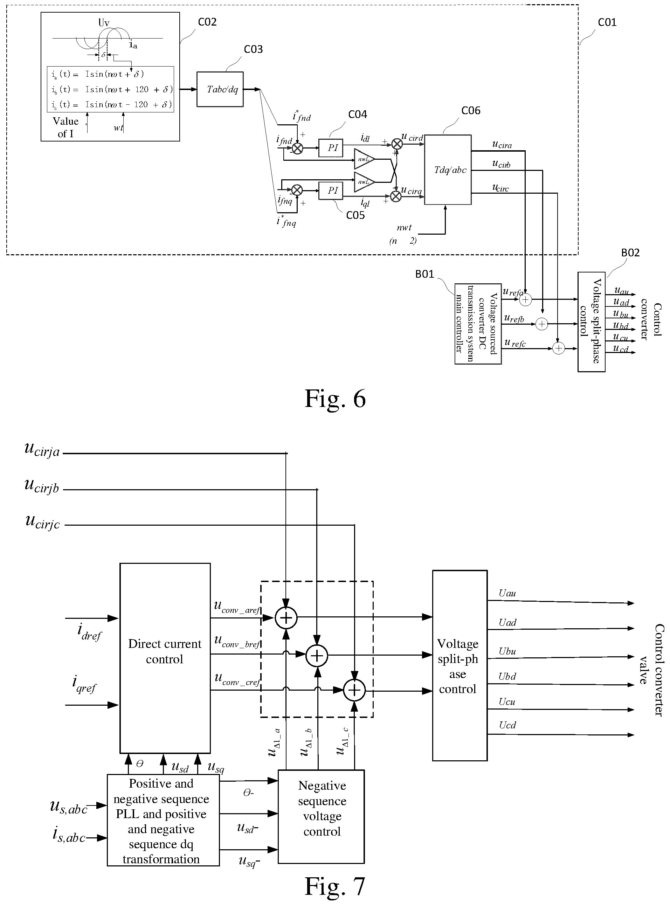

Fig. 6 is a diagram of an additional controller provided by an embodiment of the application.

As shown in Fig. 6, the additional controller C01 comprises an input signal generator C02, a first PI control module C04 and a second PI control module C05, a dq transformation module C03, and a dq inverse transformation module C06.

The input signal generator C02 generates three-phase negative sequence currents $i_a$, $i_b$, $i_c$, and the amplitude I thereof is an amplitude of a harmonic current injected into the converter, which is p1% of a rated bridge arm current, where p1 is 0.001-100 and can be set according to an actual DC transmission line voltage; a phase $\omega t$ is based on a valve side voltage $U_v$ or a grid side voltage $U_s$; n is an integer and n≥2; $\delta$ is a compensation angle, 0°≤$\delta$≤90°.

$$i_a(t) = I\sin(n\omega t + \delta)$$

$$i_b(t) = I\sin(n\omega t + 120° + \delta)$$

$$i_c(t) = I\sin(n\omega t - 120° + \delta)$$

The three-phase negative sequence currents $i_a$, $i_b$ and $i_c$ generate current reference components $i_{fnd}^*$ and $i_{fnq}^*$ through the dq transformation module C03, and difference components generated by comparing current reference components $i_{fnd}^*$ and $i_{fnq}^*$ with dq components $i_{fnd}$ and $i_{fnq}$ of a measured three-phase current signal are input into the first PI control module C04 and the second PI control module C05 to obtain $i_{d1}$ and $i_{q1}$. Here, the difference components:

$$\Delta i_{fnd} = i_{fnd}^* - i_{fnd}, \quad \Delta i_{fnq} = i_{fnq}^* - i_{fnq}.$$

The dq axis components of the additional control signal of the additional controller are: $u_{cird}$ and $u_{cirq}$:

$$u_{cird} = k_p \left( i^*_{fnd} - i_{fnd} \right) + k_i \int_0^t \left( i^*_{fnd} - i_{fnd} \right) + n\omega L i_{fnq}$$

$$u_{cirq} = k_p \left( i^*_{fnq} - i_{fnq} \right) + k_i \int_0^t \left( i^*_{fnq} - i_{fnq} \right) - n\omega L i_{fnd}$$

In C06, the additional control signals $u_{cira}$, $u_{cirb}$ and $u_{circ}$ of the additional controller are obtained through dq inverse transformation.

As shown in Fig. 7, in one possible implementation of the method, the additional control signals $u_{cira}$, $u_{cirb}$ and $u_{circ}$ output by the additional controller are superimposed on voltage control signals $u_{refa}$, $u_{refb}$ and $u_{refc}$ output by a main controller B01 of the voltage sourced converter direct-current transmission system as converter valve control signals, so that the converter valve generates a harmonic current in a three-phase bridge arm of the converter. As shown in Fig. 1, the converter valve generates a harmonic current 5 in the three-phase bridge arm of the converter valve.

When the voltage sourced converter direct-current transmission system is in normal operation, the additional controller is not activated. The additional controller is put into operation when the system is shut down and accelerated discharge is required.

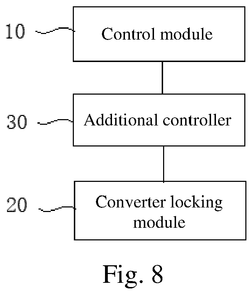

Fig. 8 is a functional block diagram of a discharge device for a voltage sourced converter direct-current transmission line provided by an embodiment of the application, comprising a control module 10, a converter locking module 20, and an additional controller 30.

The control module 10 unlocks a converter valve by using a residual voltage of a direct-current line.

The additional controller 30 generates an additional control signal and superimposes the additional control signal on a reference voltage output by a main controller of the voltage sourced converter direct-current transmission system so that the converter valve generates a harmonic current in a three-phase bridge arm of a converter.

The converter locking module 20 locks the converter when a direct-current transmission line voltage is lower than a voltage setting or an average voltage of normal operating submodules in the bridge arm of the converter is lower than a submodule operating voltage setting.

Optionally, the control module 10 charges the converter by using a residual voltage of the direct-current line; determines whether the charging can be completed; unlocks the converter valve if yes; closes an AC incoming switch and charges the converter if not, determines again whether the charging can be completed; and opens the AC incoming switch and unlocks the converter valve at the same time if the charging can be completed.

The additional controller 30 may comprise an input signal generator, a transformation module, a first PI control module, a second PI control module and an inverse transformation module.

The input signal generator generates three-phase negative sequence currents; the transformation module transforms the three-phase negative sequence currents into a first current reference component and a second current reference component; the first PI control module receives a first difference component generated by comparing the first current reference component with a measured three-phase current signal, and outputs a first current difference component; the second PI control module receives a second difference component generated by comparing the second current reference component with a measured three-phase current signal, and outputs a second current difference component; and the inverse transformation module receives the first current difference component and the second current difference component, and outputs the additional control signal.

It should be understood that the above-mentioned device embodiments are only schematic. For example, the division of units/modules described in the above embodiments is only a logical function division, and there may be another division mode in actual implementation. For example, multiple units, modules, or components may be combined, or integrated into another system, or some features may be omitted or not performed. If the integrated units/modules are implemented in the form of a software module and sold or used as an independent product, it can be stored in a computer-readable memory. The memory includes a USB flash drive, Read-Only Memory (ROM), Random Access Memory (RAM), removable hard disk, magnetic disk or optical disk, and other media that can store program codes.

The embodiments of the application have been introduced in detail above. Specific examples are applied herein to illustrate the principle and implementation of the application. The above embodiments are only used to help understand the method of the application and its core ideas. The changes or deformations made by those skilled in the art based on the ideas of the application and the specific implementation and application scope of the application are within the scope of the application. To sum up, the content of this specification should not be understood as a limitation of the application.

**Claims**

1. A discharge method for a voltage sourced converter direct-current transmission line, comprising:

unlocking a converter valve;

generating an additional control signal by an additional controller and superimposing the additional control signal on a reference voltage output by a main controller of a voltage sourced converter direct-current transmission system, so that the converter valve generates a harmonic current in a three-phase bridge arm of a converter; and locking the converter when a direct-current transmission line voltage is lower than a voltage setting or an average voltage of normal operating submodules in the bridge arm of the converter is lower than a submodule operating voltage setting.

2. The method according to claim 1, wherein before unlocking the converter, the method further comprises:

charging the converter by using a residual voltage of the direct-current line, determining whether the charging can be completed, and unlocking the converter valve if yes;

wherein after unlocking the converter, the method further comprises:

if the charging cannot be completed, closing an AC incoming switch, charging the converter, and determining again whether the charging can be completed; and

if the charging can be completed, opening the AC incoming switch and unlocking the converter valve at a same time.

3. The method according to claim 1 or 2, wherein the additional controller comprises:

an input signal generator configured to generate three-phase negative sequence currents;

a transformation module configured to transform the three-phase negative sequence currents into a first current reference component and a second current reference component;

a first PI control module configured to receive a first difference component generated by comparing the first current reference component with a measured three-phase current signal, and output a first current difference component;

a second PI control module configured to receive a second difference component generated by comparing the second current reference component with the measured three-phase current signal, and output a second current difference component; and

an inverse transformation module configured to receive the first current difference component and the second current difference component, and output the additional control signal.

4. The method according to claim 3, wherein the input signal generator generates three-phase negative sequence currents $i_a$, $i_b$, $i_c$, the amplitude I thereof is an amplitude of a harmonic current injected into the converter, which is p1% of a rated bridge arm current, where p1 is 0.001-100 and can be set according to an actual DC transmission line voltage; a phase $\omega t$ is based on a valve side voltage $U_v$ or a grid side voltage $U_s$; n is an integer and $n \geq 2$; $\delta$ is a compensation angle, $0° \leq \delta \leq 90°$; and

$$i_a(t) = I\sin(n\omega t + \delta)$$

$$i_b(t) = I\sin(n\omega t + 120° + \delta)$$

$$i_c(t) = I\sin(n\omega t - 120° + \delta)$$

5. The method according to claim 3, wherein the additional control signals $u_{cira}$, $u_{cirb}$ and $u_{circ}$ output by the additional controller are correspondingly superimposed on voltage control signals $u_{refa}$, $u_{refb}$ and $u_{refc}$ output by the main controller of the voltage sourced converter direct-current transmission system to serve as converter valve control signals, so that the converter valve generates the harmonic current in the three-phase bridge arm.

6. The method according to claim 1 or 2, wherein during normal operation, the additional controller exits, and is put back in when discharging is required.

7. A discharge device for a voltage sourced converter direct-current transmission line, comprising:

a control module configured to unlock a converter valve;

an additional controller configured to generate an additional control signal and superimpose the additional control signal on a reference voltage output by a voltage sourced converter direct-current transmission main controller, so that the converter valve generates a harmonic current in a three-phase bridge arm of a converter; and a converter locking module configured to lock the converter when a direct-current transmission line voltage is lower than a voltage setting or an average voltage of normal operating submodules in the bridge arm of the converter is lower than a submodule operating voltage setting.

8. The device according to claim 7, wherein the control module is configured to charge the converter by using a residual voltage of the direct-current line, determine whether the charging can be completed, unlock the converter valve if yes, close an AC incoming switch and charge the converter if not, determine again whether the charging can be completed, and open the AC incoming switch and unlock the converter valve at a same time if the charging can be completed.

9. The device according to claim 7 or 8, wherein the additional controller comprises:

an input signal generator configured to generate three-phase negative sequence currents;
a transformation module configured to transform the three-phase negative sequence currents into a first current reference component and a second current reference component;
a first PI control module configured to receive a first difference component generated by comparing the first current reference component with a measured three-phase current signal, and output a first current difference component;
a second PI control module configured to receive a second difference component generated by comparing the second current reference component with the measured three-phase current signal, and output a second current difference component; and
an inverse transformation module configured to receive the first current difference component and the second current difference component, and output the additional control signal.

10. A computer-readable storage medium on which a processor program is stored, which when executed by a device according to claim 7, causes the device according to claim 7 to carry out the method according to any one of claims 1-6.

**Patentansprüche**

1. Entladungsverfahren für eine Gleichstromübertragungsleitung eines spannungsgespeisten Wandlers, umfassend:

Entsperren eines Wandlerventils;
Generieren eines zusätzlichen Steuersignals durch eine zusätzliche Steuereinrichtung und Überlagern einer Referenzspannung, die von einer Hauptsteuereinrichtung eines Gleichstromübertragungssystems eines spannungsgespeisten Wandlers ausgegeben wird, mit dem zusätzlichen Steuersignal, so dass das Wandlerventil einen Oberschwingungsstrom in einem Dreiphasenbrückenzweig eines Wandlers generiert; und
Sperren des Wandlers, wenn eine Gleichstromübertragungsleitungsspannung niedriger als eine Spannungseinstellung ist oder eine durchschnittliche Spannung von im Normalbetrieb befindlichen Untermodulen in dem Brückenzweig des Wandlers niedriger als eine Untermodulbetriebsspannungseinstellung ist.

2. Verfahren nach Anspruch 1, wobei das Verfahren vor dem Entsperren des Wandlers ferner umfasst:

Aufladen des Wandlers unter Verwendung einer Restspannung der Gleichstromleitung, Bestimmen, ob das Aufladen abgeschlossen werden kann, und wenn ja, Entsperren des Wandlers;
wobei das Verfahren nach dem Entsperren des Wandlers ferner umfasst:

wenn das Aufladen nicht abgeschlossen werden kann, Schließen eines AC-Eingangsschalters, Aufladen des Wandlers und erneut Bestimmen, ob das Aufladen abgeschlossen werden kann; und
wenn das Aufladen abgeschlossen werden kann, öffnen des AC-Eingangsschalters und zur selben Zeit Entsperren des Wandlerventils.

3. Verfahren nach Anspruch 1 oder 2, wobei die zusätzliche Steuereinrichtung umfasst:

einen Eingangssignalgenerator, der zum Generieren von Dreiphasenströmen mit negativer Sequenz konfiguriert ist;

ein Transformationsmodul, das zum Transformieren der Dreiphasenströme mit negativer Sequenz in eine erste Stromreferenzkomponente und eine zweite Stromreferenzkomponente konfiguriert ist;

ein erstes PI-Steuermodul, das zum Empfangen einer ersten Differenzkomponente, die durch Vergleichen der ersten Stromreferenzkomponente mit einem gemessenen Dreiphasenstromsignal generiert wird, und Ausgeben einer ersten Stromdifferenzkomponente konfiguriert ist;

ein zweites PI-Steuermodul, das zum Empfangen einer zweiten Differenzkomponente, die durch Vergleichen der zweiten Stromreferenzkomponente mit dem gemessenen Dreiphasenstromsignal generiert wird, und Ausgeben einer zweiten Stromdifferenzkomponente konfiguriert ist; und

ein Inverstransformationsmodul, das zum Empfangen der ersten Stromdifferenzkomponente und der zweiten Stromdifferenzkomponente und Ausgeben des zusätzlichen Steuersignals konfiguriert ist.

4. Verfahren nach Anspruch 3, wobei der Eingangssignalgenerator Dreiphasenströme mit negativer Sequenz $i_a$, $i_b$, $i_c$ generiert, deren Amplitude I eine Amplitude eines in den Wandler eingespeisten Oberschwingungsstroms ist, der p1% eines Brückenzweigbemessungsstroms ist, wobei p1 0,001-100 ist und gemäß einer tatsächlichen DC-Übertragungsleitungsspannung einstellbar ist; eine Phase $\omega t$ auf einer ventilseitigen Spannung $U_v$ oder einer netzseitigen Spannung $U_s$ basiert; n eine Ganzzahl und $\geq 2$ ist; $\delta$ ein Kompensationswinkel ist, wobei $0°\leq\delta\leq90°$; und

$$i_a(t) = I\sin(n\omega t + \delta)$$

$$i_b(t) = I\sin(n\omega t + 120° + \delta)$$

$$i_c(t) = I\sin(n\omega t - 120° + \delta)$$

5. Verfahren nach Anspruch 3, wobei die zusätzlichen Steuersignale $u_{cira}$, $u_{cirb}$ und $u_{circ}$, die von der zusätzlichen Steuereinrichtung ausgegeben werden, über Spannungssteuersignale $u_{refa}$, $u_{refb}$ und $u_{refc}$ gelagert werden, die von der Hauptsteuereinrichtung des Gleichstromübertragungssystems des spannungsgespeisten Wandlers ausgegeben werden, um als Wandlerventilsteuersignale zu dienen, so dass das Wandlerventil den Oberschwingungsstrom in dem Dreiphasenbrückenzweig generiert.

6. Verfahren nach Anspruch 1 oder 2, wobei die zusätzliche Steuereinrichtung im Normalbetrieb deaktiviert wird und wieder aktiviert wird, wenn eine Entladung erforderlich ist.

7. Entladungsvorrichtung für eine Gleichstromübertragungsleitung eines spannungsgespeisten Wandlers, umfassend:

ein Steuermodul, das zum Entsperren eines Wandlerventils konfiguriert ist;

eine zusätzliche Steuereinrichtung, die zum Generieren eines zusätzlichen Steuersignals und Überlagern einer Referenzspannung, die von einer Gleichstromübertragungshauptsteuereinrichtung des spannungsgespeisten Wandlers ausgegeben wird, mit dem zusätzlichen Steuersignal konfiguriert ist, so dass das Wandlerventil einen Oberschwingungsstrom in einem Dreiphasenbrückenzweig eine Wandlers generiert; und

ein Wandlersperrmodul, das zum Sperren des Wandlers konfiguriert ist, wenn eine Gleichstromübertragungsleitungsspannung niedriger als eine Spannungseinstellung ist oder eine durchschnittliche Spannung von im Normalbetrieb befindlichen Untermodulen in dem Brückenzweig des Wandlers niedriger als eine Untermodulbetriebsspannungseinstellung ist.

8. Vorrichtung nach Anspruch 7, wobei das Steuermodul dazu konfiguriert ist, den Wandler unter Verwendung einer Restspannung der Gleichstromleitung aufzuladen, zu bestimmen, ob das Aufladen abgeschlossen werden kann, wenn ja, den Wandler zu entsperren, wenn nicht, einen AC-Eingangsschalter zu schließen und den Wandler aufzuladen, erneut zu bestimmen, ob das Aufladen abgeschlossen werden kann, und den AC-Eingangsschalter zu öffnen und zur gleichen Zeit das Wandlerventil zu entsperren, wenn das Aufladen abgeschlossen werden kann.

9. Vorrichtung nach Anspruch 7 oder 8, wobei die zusätzliche Steuereinrichtung umfasst:

einen Eingangssignalgenerator, der zum Generieren von Dreiphasenströmen mit negativer Sequenz konfiguriert ist;

ein Transformationsmodul, das zum Transformieren der Dreiphasenströme mit negativer Sequenz in eine erste Stromreferenzkomponente und eine zweite Stromreferenzkomponente konfiguriert ist;

ein erstes PI-Steuermodul, das zum Empfangen einer ersten Differenzkomponente, die durch Vergleichen der ersten Stromreferenzkomponente mit einem gemessenen Dreiphasenstromsignal generiert wird, und Ausgeben einer ersten Stromdifferenzkomponente konfiguriert ist;

ein zweites PI-Steuermodul, das zum Empfangen einer zweiten Differenzkomponente, die durch Vergleichen der zweiten Stromreferenzkomponente mit dem gemessenen Dreiphasenstromsignal generiert wird, und Ausgeben einer zweiten Stromdifferenzkomponente konfiguriert ist; und

ein Inverstransformationsmodul, das zum Empfangen der ersten Stromdifferenzkomponente und der zweiten Stromdifferenzkomponente und Ausgeben des zusätzlichen Steuersignals konfiguriert ist.

**10.** Computerlesbares Speichermedium, auf dem ein Verarbeitungsprogramm gespeichert ist, das bei Ausführung durch eine Vorrichtung nach Anspruch 7 bewirkt, dass die Vorrichtung nach Anspruch 7 das Verfahren nach einem der Ansprüche 1 bis 6 ausführt.

**Revendications**

**1.** Procédé de décharge pour une ligne de transmission de courant continu à convertisseur de tension, comprenant :

le déverrouillage d'une vanne de convertisseur ;

la génération d'un signal de commande supplémentaire par un dispositif de commande supplémentaire et la superposition du signal de commande supplémentaire sur une sortie de tension de référence par un dispositif de commande principal d'un système de transmission de courant continu à convertisseur de tension source, de sorte que la vanne de convertisseur génère un courant harmonique dans un bras de pont triphasé d'un convertisseur ; et

le verrouillage du convertisseur lorsqu'une tension de ligne de transmission en courant continu est inférieure à un réglage de tension ou qu'une tension moyenne des sous-modules de fonctionnement normal dans le bras de pont du convertisseur est inférieure au réglage de tension de fonctionnement d'un sous-module.

**2.** Procédé selon la revendication 1, dans lequel, avant de déverrouiller le convertisseur, le procédé comprend en outre :

la charge du convertisseur en utilisant une tension résiduelle de la ligne de courant continu, la détermination du fait que la charge peut être terminée et le déverrouillage de la vanne du convertisseur si tel est le cas ;

dans lequel, après avoir déverrouillé le convertisseur, le procédé comprend en outre :

si la charge ne peut pas être terminée, la fermeture d'un interrupteur d'entrée CA, la charge du convertisseur et la détermination à nouveau du fait que la charge peut être terminée ; et

si la charge peut être terminée, l'ouverture de l'interrupteur d'entrée CA et le déverrouillage de la vanne du convertisseur en même temps.

**3.** Procédé selon la revendication 1 ou 2, dans lequel le dispositif de commande supplémentaire comprend :

un générateur de signal d'entrée configuré pour générer des courants triphasés inverses ;

un module de transformation configuré pour transformer les courants triphasés inverses en un premier composant de référence de courant et un deuxième composant de référence de courant ;

un premier module de commande PI configuré pour recevoir un composant de première différence généré en comparant le premier composant de référence de courant avec un signal de courant triphasé, et émettre un premier composant de différence de courant ;

un deuxième module de commande PI configuré pour recevoir un deuxième composant de différence généré en comparant le deuxième composant de référence de courant avec le signal de courant triphasé mesuré et émettre un deuxième composant de différence de courant ; et

un module de transformation inverse configuré pour recevoir le premier composant de différence de courant et le deuxième composant de différence de courant, et émettre le signal de commande supplémentaire.

**4.** Procédé selon la revendication 3, dans lequel le générateur de signal d'entrée génère des courants triphasés inverses $i_a$, $i_b$, $i_c$, leur amplitude I est une amplitude d'un courant harmonique injecté dans le convertisseur, qui est pl % d'un courant nominal de bras de pont, où p1 est de 0,001-100 et peut être réglé en fonction d'une tension réelle de ligne de transmission CC ; une phase $\overline{\omega}t$ est basée sur une tension côté vanne $U_v$ ou une tension côté réseau tension $U_s$ ; n est un entier et $n \geq 2$ ; $\delta$ est un angle de compensation, $0° \leq \delta \leq 90°$ ; et

$$i_a(t) = Isin(n\varpi t + \delta)$$

$$i_b(t) = Isin(n\varpi t + 120° + \delta)$$

$$i_c(t) = Isin(n\varpi t - 120° + \delta)$$

5. Procédé selon la revendication 3, dans lequel les signaux de commande supplémentaires $u_{cira}$, $u_{cirb}$ et $u_{circ}$ émis par le dispositif de commande supplémentaire sont superposés de manière correspondante aux signaux de commande de tension $u_{refa}$, $u_{refb}$ et $u_{refc}$ par le dispositif de commande principal du système de transmission de courant continu à convertisseur de tension pour servir de signaux de commande de vanne de convertisseur, de sorte que la vanne de conversion génère le courant harmonique dans le bras de pont triphasé.

6. Procédé selon la revendication 1 ou 2, dans lequel, pendant le fonctionnement normal, le dispositif de commande supplémentaire sort et est remis en place lorsqu'une décharge est requise.

7. Dispositif de décharge pour une ligne de transmission de courant continu à convertisseur de tension, comprenant :

un module de commande configuré pour déverrouiller une vanne de convertisseur ;
un dispositif de commande supplémentaire configuré pour générer un signal de commande supplémentaire et superposer le signal de commande supplémentaire sur une sortie de tension de référence par un dispositif de commande principal de transmission de courant continu à convertisseur de tension source, de sorte que la vanne de convertisseur génère un courant harmonique dans un bras de pont triphasé d'un convertisseur ; et
un module de verrouillage de convertisseur configuré pour verrouiller le convertisseur lorsqu'une tension de ligne de transmission en courant continu est inférieure à un réglage de tension ou qu'une tension moyenne des sous-modules de fonctionnement normal dans le bras de pont du convertisseur est inférieure au réglage de tension de fonctionnement d'un sous-module.

8. Dispositif selon la revendication 7, dans lequel le module de commande est configuré pour charger le convertisseur en utilisant une tension résiduelle de la ligne de courant continu, déterminer si la charge peut être terminée, déverrouiller la vanne du convertisseur si tel est le cas, fermer un interrupteur d'entrée CA et charger le convertisseur si ce n'est pas le cas, déterminer à nouveau si la charge peut être terminée, et ouvrir l'interrupteur d'entrée CA et déverrouiller la vanne du convertisseur en même temps si la charge peut être terminée.

9. Dispositif selon la revendication 7 ou 8, dans lequel le dispositif de commande supplémentaire comprend :

un générateur de signal d'entrée configuré pour générer des courants triphasés inverses ;
un module de transformation configuré pour transformer les courants triphasés inverses en un premier composant de référence de courant et un deuxième composant de référence de courant ;
un premier module de commande PI configuré pour recevoir un premier composant de différence généré en comparant le premier composant de référence de courant avec un signal de courant triphasé mesuré, et émettre un premier composant de différence de courant ;
un deuxième module de commande PI configuré pour recevoir un deuxième composant de différence généré en comparant le deuxième composant de référence de courant avec le signal de courant triphasé mesuré, et produire un deuxième composant de différence de courant ; et
un module de transformation inverse .configuré pour recevoir le premier composant de différence de courant et le deuxième composant de différence de courant, et émettre le signal de commande supplémentaire.

10. Support de stockage lisible par ordinateur sur lequel est stocké un programme processeur, qui, lorsqu'il est exécuté par un dispositif selon la revendication 7, amène le dispositif selon la revendication 7 à exécuter le procédé selon l'une quelconque des revendications 1 à 6.

Fig. 1

```
        ╭─────────────╮
        │    Start     │
        ╰──────┬───────╯
               │
               │              ╭ S02
               ▼
    ┌──────────────────────┐
    │ Unlocking a converter │
    │        Valve          │
    └──────────┬───────────┘
               │              ╭ S03
               ▼
    ┌──────────────────────────┐
    │ Generating an additional │
    │ control signal by an     │
    │ additional controller and│
    │ superimposing the        │
    │ signal on a reference    │
    │ voltage output by a main │
    │ controller of the        │
    │ voltage sourced converter│
    │ direct-current           │
    │ transmission system      │
    └───────────┬──────────────┘
                │
                ▼
```

Voltage of a DC line is lower than a voltage setting or an average voltage of the normal operating submodules in the converter bridge arm is lower than a submodule operating voltage setting

S05

No

Yes

```
    ┌──────────────────────┐
    │ Locking the converter │
    └──────────┬───────────┘
               │
               ▼
        ╭─────────────╮
        │     End      │
        ╰─────────────╯
```

Fig. 2

EP 4 184 742 B1

Fig. 3

14

Start

S01

Charging can be completed or not?

No

S03

Yes

Closing AC incoming switch and charging the converter

S02

Unlocking a converter Valve

Charging completed or not?

No

Yes

Opening AC incoming switch and unlocking the converter valve at the same

S04

Voltage of a DC line is lower than a voltage setting or an average voltage of the normal operating submodules in the converter bridge arm is lower than a submodule operating voltage setting

S05

No

Yes

Locking the converter

End

Fig. 4

```
                    ┌─────────┐
                    │  Start  │
                    └─────────┘
                         │
                         ▼                          S01              No
                    ◇ Charging can be ◇────────────────────────────────┐         S03
                      completed or not?                                 │
                         │                                              ▼
                        Yes                                  ┌───────────────────────┐
                                                             │ Closing AC incoming    │
                         │                 S02               │ switch and charging    │
                         ▼                                   │ the converter          │
              ┌───────────────────────┐                     └───────────────────────┘
              │ Unlocking a converter │                                  │
              │ Valve                 │                                  ▼
              └───────────────────────┘                     ◇ Charging can be ◇──── No ──┐
                         │                                     completed or not?          │
                         │                                          │                     │
                         │                                         Yes                    │
                         │                                          ▼                     │
                         │                                ┌───────────────────────┐  S04  │
                         │◀───────────────────────────────│ Opening AC incoming   │       │
                         │                                │ switch and unlocking  │◀──────┘
                         ▼                                │ the converter valve   │
              ┌───────────────────────┐   S041           │ at the same time      │
              │ Controlling the       │                  └───────────────────────┘
              │ converter to generate │
              │ a harmonic current in │
              │ a three-phase bridge  │
              │ arm of the converter  │
              └───────────────────────┘
                         │◀────────────────────────────────┐
                         ▼                                  │
        ◇ Voltage of a DC line is lower than a             │
          voltage setting or an average voltage of   S05   │
          the normal operating submodules in the   ────────┘
          converter bridge arm is lower than a     No
          submodule operating voltage setting? ◇
                         │
                        Yes
                         ▼
              ┌───────────────────────┐
              │ Locking the converter │
              └───────────────────────┘
                         │
                         ▼
                    ┌─────────┐
                    │   End   │
                    └─────────┘
```

## Fig. 5

Fig. 6

Fig. 7

10 ~ | Control module |

30 ~ | Additional controller |

20 ~ | Converter locking module |

## Fig. 8